# EUROPÄISCHE PATENTANMELDUNG

(11) **EP 1 536 153 A1**
(43) Veröffentlichungstag der Anmeldung: **01.06.2005**
(21) Anmeldenummer: 04292596.6
(22) Anmeldetag: 02.11.2004
(51) Int. Cl.: F16C 32/04

(54) **Magnetische Lagerung mit einem in einem ringförmigen, evakuierten Gehäuse angeordneten Supraleiter**

(30) Priorität: 27.11.2003 DE 20318389 U
(71) Anmelder: Nexans, 75008 Paris (FR)
(72) Erfinder: Schippl, Klaus, Dipl.-Ing, 30659 Hannover (DE)
(74) Vertreter: Döring, Roger, Dipl.-Ing.

(57) **Zusammenfassung**

Es wird eine magnetische Lagerung einer Rotorwelle gegen einen Stator mit folgenden Merkmalen beschrieben:
a) die Rotorwelle (1) enthält im Bereich des Stators (3) eine Anordnung von nebeneinander angeordneten permanentmagnetischen Elementen (2),
b) der Stator (3) weist eine Struktur (6α) mit Hoch Tc-Supraleitermaterial mit Körnern auf,
c) das Hoch Tc-Supraleitermaterial befindet sich an/in der Oberfläche eines koaxial zur Rotorwelle (1) angeordneten Kühlkörpers (6),
d) der Kühlkörper (6) weist entweder einen ebenfalls koaxial zur Rotorwelle (1) angeordneten Kühlkanal (8) auf oder ist massiv ausgebildet und in Kontakt mit einem Kaltkopf,
e) der Kühlkörper (6) befindet sich im Innern eines Gehäuses (5), in welchem ein Vakuum herrscht.

## Beschreibung

Die Erfindung betrifft eine magnetische Lagerung einer Rotorwelle gegen einen Stator.

Aus der DE 44 36 831 C2 ist ein passives Magnetlager mit einem HochtemperaturSupraleiter bekannt. Das bekannte Magnetlager umfaßt ein erstes Lagerteil, das mit einer Rotorwelle verbunden ist, und ein zweites Lagerteil, das in einem Stator angeordnet ist und das erste Lagerteil umgibt. Eines der beiden Lagerteile weist einen Hochtemperatur Supraleiter auf. Das andere Lagerteil umfaßt eine Anordnung von nebeneinander angeordneten permanentmagnetischen Elementen. Die Magnetisierung benachbarter permanentmagnetischer Elemente ist entgegengesetzt zueinander. In einer Ausgestaltung sind die Permanentmagnete in hohlzylindrischer Anordnung am inneren Lagerteil (Rotorwelle) vorgesehen und der Supraleiter ist als hohlzylindrische Struktur an der Innenseite eines hohlzylindrischen Trägerkörpers des äußeren Lagerteils (Stator) angeordnet. Im Trägerkörper sind Kühlkanäle zum Durchleiten von flüssigem Stickstoff zur Kühlung des Supraleiters ausgebildet. Der flüssige Stickstoff wird den Kühlkanälen aus einem externen Vorratsbehälter zugeleitet. Ein Füllstandsmelder gibt bei Absinken des Kühlmittels unter eine vorgegebene Schwelle ein Signal zum Abschalten, bevor die Tragwirkung der Lagerung infolge Erwärmung abnimmt.

Derartige Magnetlager finden neuerdings Anwendung z. B. bei Turbomolekularpumpen, Ultrazentrifugen, Spindeln von Werkzeugmaschinen, bei Motoren, Generatoren, Turbinen und Kompressoren.

Aus der DE 100 42 962 C1 ist ein Magnetlager mit einem gleichen Aufbau wie bei der DE 44 36 831 C2 bekannt, bei der eine Kühlvorrichtung zur Kühlung des Supraleitermaterials der Supraleiteranordnung auf eine Betriebstemperatur unterhalb der Sprungtemperatur des Supraleitermaterials vorgesehen ist. Die Supraleiteranordnung ist von mindestens einem thermischen Isolationsraum umschlossen, der mit einem trockenen Schutzgas gefüllt ist oder evakuiert ist. Alternativ kann der Isolationsraum mit Isolierschaum, Superisolierung, Isolierflächen oder Glasfasern gefüllt sein. Die Kühlvorrichtung weist mindestens einen Kryokühler mit wenigstens einem Kaltkopf auf, der wärmeleitend an die Supraleiteranordnung gekoppelt ist.

Die bekannten Magnetlager weisen den Nachteil auf, daß entweder überhaupt keine Isolierung für den Kaltbereich des Lagers vorhanden ist bzw. die vorgesehene Isolation sehr aufwendig ist bzw. noch nicht vollauf befriedigen konnte.

Ein weiterer Nachteil der Magnetlager nach dem Stand der Technik ist darin zu sehen, daß der Supraleiteraufbau nicht direkt von der Isolation umgeben ist. Von daher ist mit erhöhten Kälteverlusten zu rechnen, wodurch die Kosten für den Betrieb der Lager sehr hoch sind.

Der vorliegenden Erfindung liegt die Aufgabe zugrunde, die bekannten Magnetlager dahingehend zu verbessern, daß der Energieaufwand für die Kühlung des Supraleiteraufbaus wesentlich verringert wird und eine Beeinflussung der den Kaltbereich umgebenden Elemente (z. B. Eisbildung) vermieden wird.

Diese Aufgabe wird durch die Merkmale a bis e des Anspruchs 1 gelöst.

Weitere vorteilhafte Ausgestaltungen der Erfindung sind in den Unteransprüchen erfaßt.

Durch die erfindungsgemäßen Maßnahmen wird eine optimale Isolierungsanordnung auch in dem extrem engen Spalt zwischen den Lagerschalen erhalten, die frei von Wirbelströmen und dennoch vakuumdicht ist. Auch ermöglicht die Erfindung, daß hohe Lagerkräfte zwischen dem gekühlten Bereich und der Vakuumhülle aufgenommen werden können.

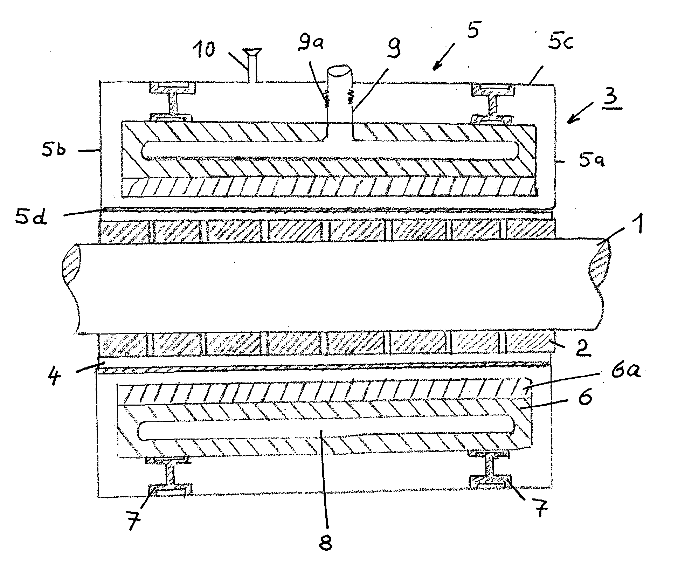

Die Erfindung ist anhand des in der Figur schematisch dargestellten Ausführungsbeispiels näher erläutert.

Die Figur zeigt einen Schnitt durch ein magnetisches Lager für eine Rotorwelle.

Die Rotorwelle 1 ist mit einer Vielzahl von nebeneinander angeordneten Permanentmagneten 2 bestückt, die fest mit der Rotorwelle 1 verbunden sind. Die magnetisierung benachbarter Permanentmagnete ist entgegengesetzt zueinander. Zwischen den Permanentmagneten ist ein nicht näher bezeichnetes ferromagnetisches Material vorgesehen.

Die Rotorwelle 1 ist in einem äußeren Lagerteil 3 angeordnet. Zwischen der Rotorwelle a bzw. den Permanentmagneten 2 befindet sich ein Luftspalt 4.

Das äußere Lagerteil 3 besteht aus einem Gehäuse 5, dessen Seitenteile 5a, 5b sowie der der Rotorwelle 1 abgekehrte Wandungsbereich 5c aus einem Metall, vorzugsweise aus rostfreiem Stahl hergestellt sind. Das innen gelegene Wandungsteil 5d besteht aus einem nichtmetallischen Werkstoff. Bevorzugt wird eine Hülse aus Keramik. Die Bauteile 5a, 5b, 5c und 5d sind vakuumdicht miteinander verbunden.

Im Innern des Gehäuses 5 befindet sich ein hohlzylindrischer Kühlkörper 6, der mittels Anstandshalter 7 in dem Gehäuse 5 gelagert ist. Der Kühlkörper 6 ist aus einem Metall mit guter thermischer Leitfähigkeit vorzugsweise aus Kupfer hergestellt. An seiner inneren Oberfläche trägt der Kühlkörper eine Struktur 6a aus HTSC (High Temperatur Super Conductor)-Supraleitermaterial. Diese Werkstoffe weisen bei Temperaturen unter 77 K nahezu keinen elektrischen Widerstand auf. Eine Kühlung mit flüssigem Stickstoff ist möglich.

Der Kühlkörper weist einen Kühlkanal 8, der über einen Anschlußstutzen 9 mit der Umgebung verbunden ist. Der Innenraum des Gehäuses 5 ist evakuiert, um die Wärmeverluste des Kühlkörpers 6 so weit wie möglich zu reduzieren. Für die Evakuierung ist ein Saugstutzen 10 vorgesehen.

Der Anschlußstutzen 9 ist entweder im Ganzen oder nur zum Teil als Faltenbalg 9a ausgebildet.

In dem zwischen den Wandungen des Gehäuses 5 und dem Kühlkörper befindlichen Vakuumraum kann eine Superisolierung vorgesehen sein, um die Verluste noch weiter zu reduzieren.

## Patentansprüche

1. Magnetische Lagerung einer Rotorwelle gegen einen Stator mit folgenden Merkmalen:
a) die Rotorwelle (1) enthält im Bereich des Stators (3) eine Anordnung von nebeneinander angeordneten permanentmagnetischen Elementen (2),
b) der Stator (3) weist eine Struktur (6a) mit Hoch Tc-Supraleitermaterial mit Körnern auf,
c) das Hoch Tc-Supraleitermaterial befindet sich an/in der Oberfläche eines koaxial zur Rotorwelle (1) angeordneten Kühlkörpers (6),
d) der Kühlkörper (6) weist entweder einen ebenfalls koaxial zur Rotorwelle (1) angeordneten Kühlkanal (8) auf oder ist massiv ausgebildet und in Kontakt mit einem Kaltkopf,
e) der Kühlkörper (6) befindet sich im Innern eines Gehäuses (5), in welchem ein Vakuum herrscht.

2. Magnetische Lagerung nach Anspruch 1, **dadurch gekennzeichnet, daß** das Gehäuse (5) ebenfalls koaxial zur Rotorwelle (1) angeordnet ist und einen im wesentlichen rechteckigen Querschnitt aufweist.

3. Magnetische Lagerung nach Anspruch 1 oder 2, **dadurch gekennzeichnet, daß** die der Rotorwelle (1) zugekehrte innere Wandung des Gehäuses (5) eine Hülse (5d) aus einem nichtmetallischen Werkstoff wie beispielsweise Glas, Keramik etc. ist.

4. Magnetische Lagerung nach einem der Ansprüche 1 bis 3, **dadurch gekennzeichnet, daß** die seitlichen Wandungsbereiche (5a,5b) sowie der der Rotorwelle (1) abgekehrte äußere Wandungsbereich (5c) des Gehäuses (5) aus Metall vorzugsweise rostfreiem Stahl bestehen.

5. Magnetische Lagerung nach einem der Ansprüche 1 bis 4, **dadurch gekennzeichnet, daß** der Kühlkörper (6) durch Abstandshalter (7) aus einem Material mit geringer Wärmeleitfähigkeit gegenüber dem der Rotorwelle (1) abgekehrten äußeren Wandungsbereich (5c) gelagert ist.

6. Magnetische Lagerung nach einem der Ansprüche 1 bis 5, **dadurch gekennzeichnet, daß** ein den Kühlkanal (8) mit der Umgebung verbindender Rohrstutzen (9) vorgesehen ist, der mit dem äußeren Wandungsbereich (5c) des Gehäuses (5) vakuumdicht verlötet oder verschweißt ist.

7. Magnetische Lagerung nach einem der Ansprüche 1 bis 6, **dadurch gekennzeichnet, daß** in den äußeren Wandungsbereich (5c) des Gehäuses (5) ein Vakuumpumpstutzen (10) vakuumdicht eingelassen ist.
